# EUROPEAN PATENT APPLICATION

(11) **EP 4 628 241 A1**
(43) Date of publication of application: **08.10.2025**
(21) Application number: 22967129.2
(22) Date of filing: 29.11.2022
(51) Int. Cl.: B23K 20/10

(54) **BONDING METHOD AND BONDING APPARATUS**

(71) Applicant: Ultex Corporation, Fukuoka-shi, Fukuoka 812-0007 (JP)
(72) Inventor: SATO, Shigeru, Fukuoka-shi, Fukuoka 812-0007 (JP)
(74) Representative: Plougmann Vingtoft a/s
(86) International application number: PCT/JP2022/044043
(87) International publication number: WO 2024/116295

(57) **Abstract**

A bonding method and a bonding device can bond members together more easily. The bonding device (1) transmits sound energy with a resonator (11) to bond a first member (3), a second member (5), and a metal granule group (7) held between the first member (3) and the second member (5). Surfaces of the members on which bonding is performed may be flat, or may have edges along the peripheries. Bonding may be performed on multiple layers of metal granules separately for each layer or simultaneously for the multiple layers. The metal granule group (7) may be located above or below the first member and the second member for bonding.

## Description

### FIELD

The present invention relates to a bonding method and a bonding device, and particularly, to a bonding method and a bonding device for bonding multiple members.

### BACKGROUND

The applicant has developed various processes for bonding using sound energy (refer to, for example, Patent Literature 1).

### CITATION LIST

### PATENT LITERATURE

Patent Literature 1: Japanese Unexamined Patent Application Publication No. 2018-008288

### BRIEF SUMMARY

### TECHNICAL PROBLEM

However, easier processes for bonding the similar materials or dissimilar materials are awaited.

One or more aspects of the present invention are directed to a bonding method and a bonding device for bonding multiple members more easily.

### SOLUTION TO PROBLEM

A bonding method according to a first aspect of the present invention is a bonding method for performing bonding on a target object. The target object includes a first member, a second member, and a first metal granule group including one or more metal granules. The method includes transmitting, with a resonator, sound energy to the target object to bond the first member and the second member with the one or more metal granules.

A bonding method according to a second aspect of the present invention is the bonding method according to the first aspect in which the first metal granule group is held between the first member and the second member in the target object. Transmitting the sound energy includes applying pressure to the target object to cause at least one metal granule to be in contact with the first member and the second member, and transmitting, with the resonator, the sound energy to the target object to cause the at least one metal granule being in contact with the first member and the second member to be bonded to the first member and the second member.

A bonding method according to a third aspect of the present invention is the bonding method according to the first or second aspect in which the one or more metal granules have a spherical shape, an ellipsoidal shape, or a shape with a flat surface.

A bonding method according to a fourth aspect of the present invention is the bonding method according to any one of the first to third aspects in which the at least one metal granule is spaced from another metal granule to be bonded to the first member and the second member.

A bonding method according to a fifth aspect of the present invention is the bonding method according to any one of the first to fourth aspects in which the first metal granule group is held between the first member and the second member in the target object.

A bonding method according to a sixth aspect of the present invention is the bonding method according to the fifth aspect in which the target object further includes a third member and a second metal granule group including one or more metal granules. The second metal granule group is held between the second member and the third member in the target object.

A bonding method according to a seventh aspect of the present invention is the bonding method according to any one of the first to sixth aspects in which transmitting the sound energy includes applying pressure to the target object. The first member has a surface in contact with the first metal granule group. The second member has a surface in contact with the first metal granule group. At least a portion of at least one of the surface of the first member or the surface of the second member is inclined with respect to a direction in which at least one of the pressure or the sound energy is applied.

A bonding method according to an eighth aspect of the present invention is the bonding method according to any one of the first to seventh aspects in which the first member and the second member are stacked on each other without the one or more metal granules in the first metal granule group held between the first member and the second member in the target object. Transmitting the sound energy includes transmitting the sound energy to bond the first member and the second member stacked on each other with the one or more metal granules in the first metal granule group.

A bonding method according to a ninth aspect of the present invention is the bonding method according to the eighth aspect in which transmitting the sound energy includes causing the one or more metal granules in the first metal granule group to penetrate at least one of the first member or the second member to bond the first member and the second member.

A bonding method according to a tenth aspect of the present invention is the bonding method according to any one of the first to ninth aspects in which the one or more metal granules in the first metal granule group are formed from a metal. The first member is formed from a metal or ceramic. The second member is formed from a metal or ceramic.

A bonding device according to an eleventh aspect of the present invention is a bonding device for performing bonding on a target object. The target object includes a first member, a second member, and a first metal granule group including one or more metal granules. The bonding device includes a resonator that transmits sound energy to the target object to bond the first member and the second member.

A bonding device according to a twelfth aspect of the present invention is the bonding device according to the eleventh aspect in which the first metal granule group is held between the first member and the second member in the target object. The resonator applies pressure to the target object to transmit sound energy to the target object to cause at least one metal granule to be in contact with and bonded to the first member and the second member.

A bonding device according to a thirteenth aspect of the present invention is the bonding device according to the eleventh aspect or the twelfth aspect in which the one or more metal granules have a spherical shape, an ellipsoidal shape, or a shape with a flat surface.

A bonding device according to a fourteenth aspect of the present invention is the bonding device according to any one of the eleventh to thirteenth aspects in which the at least one metal granule is spaced from another metal granule to be bonded to the first member and the second member.

A bonding device according to a fifteenth aspect of the present invention is the bonding device according to any one of the eleventh to fourteenth aspects in which the first metal granule group is held between the first member and the second member in the target object.

A bonding device according to a sixteenth aspect of the present invention is the bonding method according to the fifteenth aspect in which the target object further includes a third member and a second metal granule group including one or more metal granules. The second metal granule group is held between the second member and the third member in the target object.

A bonding device according to a seventeenth aspect of the present invention is the bonding device according to any one of the eleventh to sixteenth aspects in which the target object receives pressure. The first member has a surface in contact with the first metal granule group. The second member has a surface in contact with the first metal granule group. At least a portion of at least one of the surface of the first member or the surface of the second member is inclined with respect to a direction in which at least one of the pressure or the sound energy is applied.

A bonding device according to an eighteenth aspect of the present invention is the bonding device according to any one of the eleventh to seventeenth aspects in which the first member and the second member are stacked on each other without the one or more metal granules in the first metal granule group held between the first member and the second member in the target object. The sound energy causes the first member and the second member stacked on each other to be bonded with the one or more metal granules in the first metal granule group.

A bonding device according to a nineteenth aspect of the present invention is the bonding device according to the eighteenth aspect in which the one or more metal granules in the first metal granule group penetrate at least one of the first member or the second member to bond the first member and the second member.

A bonding device according to a twentieth aspect of the present invention is the bonding device according to any one of the eleventh to nineteenth aspects in which the one or more metal granules in the first metal granule group are formed from a metal. The first member is formed from a metal or ceramic. The second member is formed from a metal or ceramic.

### ADVANTAGEOUS EFFECTS

The technique according to the above aspects of the present invention can bond members using metal granules that are smaller than the members.

### BRIEF DESCRIPTION OF DRAWINGS

FIG. 1 is a block diagram of a bonding device according to an embodiment of the present invention, showing an example structure.
FIG. 2A is an image of an entire view of a target object after an example of bonding, and FIG. 2B is an image of a side view of the target object.
FIG. 3A is an image of an entire view of another target object after another example of bonding, and FIG. 3B is an image of a side view of still another target object after still another example of bonding.
FIG. 4 is a block diagram of the bonding device according to the embodiment of the present invention, showing another example structure.
FIG. 5A is an image of an entire view of another target object after another example of bonding, and FIG. 5B is an image of a side view of the target object.
FIG. 6 is a block diagram of the bonding device according to the embodiment of the present invention, showing still another example structure.
FIG. 7 is a block diagram of the bonding device according to the embodiment of the present invention, showing still another example structure.
FIG. 8 is an image of multiple sheets of metal foil with two balls.

### DETAILED DESCRIPTION

One or more embodiments of the present invention will now be described with reference to the drawings. Embodiments of the present invention are not limited to one or more embodiments described below.

### Embodiment

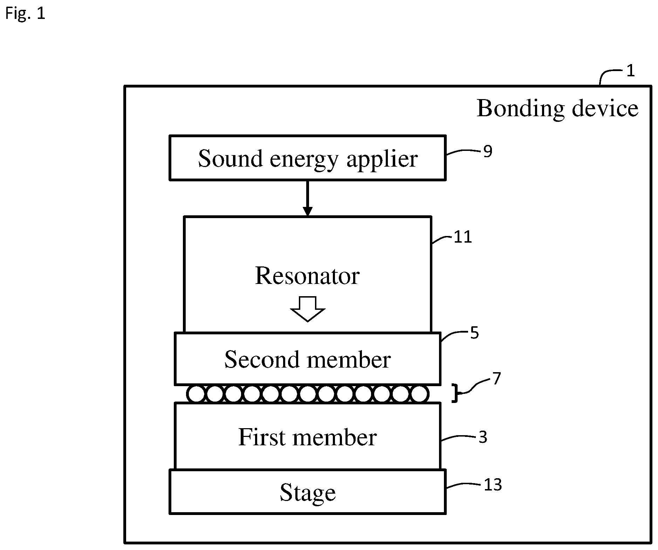

FIG. 1 is a block diagram of a bonding device according to an embodiment of the present invention, showing an example structure.

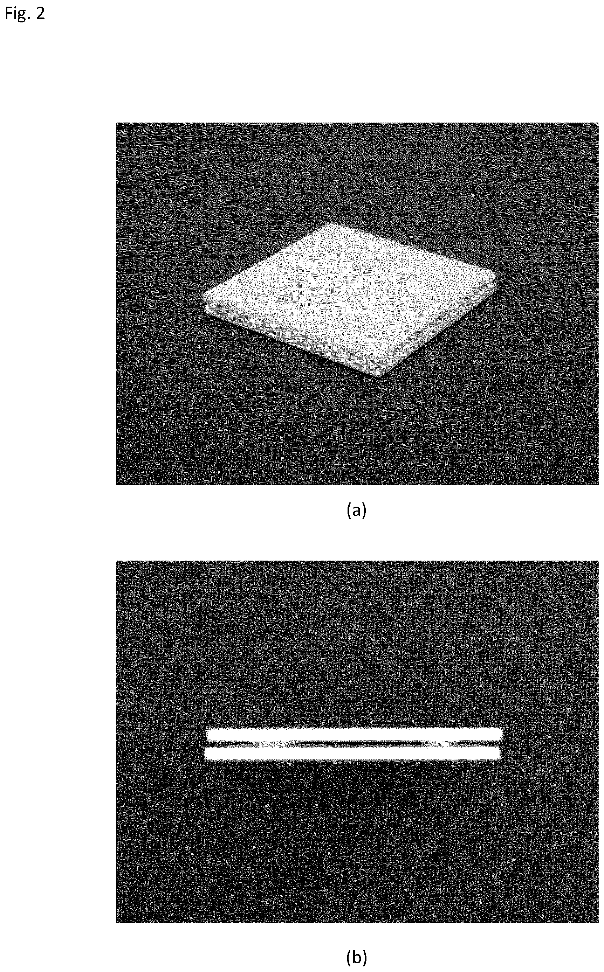

A bonding device 1 performs bonding on a target object. The target object includes a first member 3, a second member 5, and a metal granule group 7. The first member 3 is formed from, for example, a metal (e.g., aluminum, copper, nickel, or steel) or ceramic (e.g., silicon nitride or silicon carbide). The second member 5 is formed from, for example, a metal (e.g., aluminum, copper, nickel, or steel) or ceramic (e.g., silicon nitride or silicon carbide). The metal granule group 7 includes one or more metal granules. Each of the metal granules is smaller than surfaces of the first member 3 and the second member 5 on which bonding is performed, and has, for example, a spherical shape or an ellipsoidal shape. Each of the metal granules may have a shape including a flat surface, or a shape with a pair of flat opposing surfaces. At least one of the metal granules may be spaced from the other metal granules (refer to, for example, FIGs. 2A and 2B). The metal granules are formed from a metal, such as aluminum, copper, steel, or platinum. The metal granule group 7 is held between the first member 3 and the second member 5.

The bonding device 1 includes a sound energy applier 9, a resonator 11, and a stage 13.

The target object is placed on the stage 13. In FIG. 1, the first member 3 is placed on the stage 13. The metal granule group 7 is placed on the first member 3. The second member 5 is placed on the metal granule group 7.

The sound energy applier 9 applies sound vibrations (vibrations with a frequency lower than or equal to 20 kHz) and/or ultrasound vibrations (vibrations with a frequency higher than 20 kHz) to the resonator 11. In this example, the vibrations may be vertical (in the same direction as the direction in which pressure is applied) or lateral (in a direction perpendicular to the direction in which pressure is applied).

The resonator 11 is, for example, a horn, and applies pressure to the target object and resonates with the sound vibrations or the ultrasound vibrations to transmit sound energy to the target object and perform bonding.

The resonator 11 applies pressure to the second member 5 from above. The resonator 11 resonates with the sound vibrations and/or the ultrasound vibrations to transmit sound energy to the target object, bonding the first member 3 and the second member 5 together with the metal granule group 7 between them. At least one of the metal granules is in contact with the first member 3 and the second member 5, and is bonded to the first member 3 and the second member 5 that are in contact with the metal granule.

The first member 3, the second member 5, and the metal granule group 7 may be formed from the similar materials or dissimilar materials.

In an example of bonding shown in FIGs. 2A and 2B, the first member 3 and the second member 5 are alumina (aluminum oxide) plates, and the metal granules in the metal granule group 7 are aluminum balls. FIG. 2A is an entire view of the bonded target object. FIG. 2B is a side view of the bonded target object. In this manner, bonding with metal balls between members can bond metal members together, or a metal member and a ceramic member together. For example, an aluminum, copper, nickel, or steel member can be bonded. In this manner, members stacked on one another can have smaller areas, and can thus, for example, greatly downsize a semiconductor including the members.

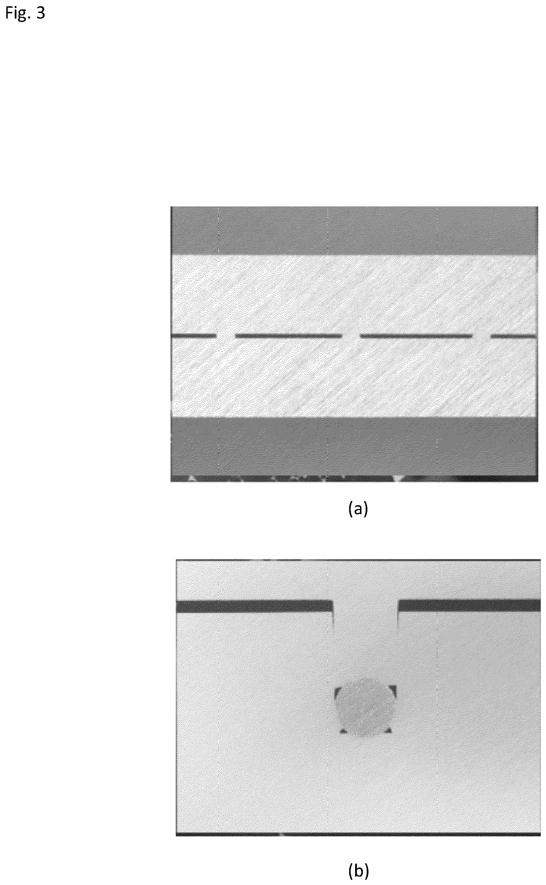

FIGs. 3A and 3B show other examples of bonding. FIG. 3A shows an example of bonding in which the metal granule balls are spaced from one another. FIG. 3B shows an example of bonding in which the recessed first member 3 and the protruding second member 5 are bonded together with a ball received in the recessed first member 3. The recessed first member 3 has inclined walls. The inclined walls and the protruding second member 5 are also bonded together. In addition to this bonding, bonding with balls may be performed.

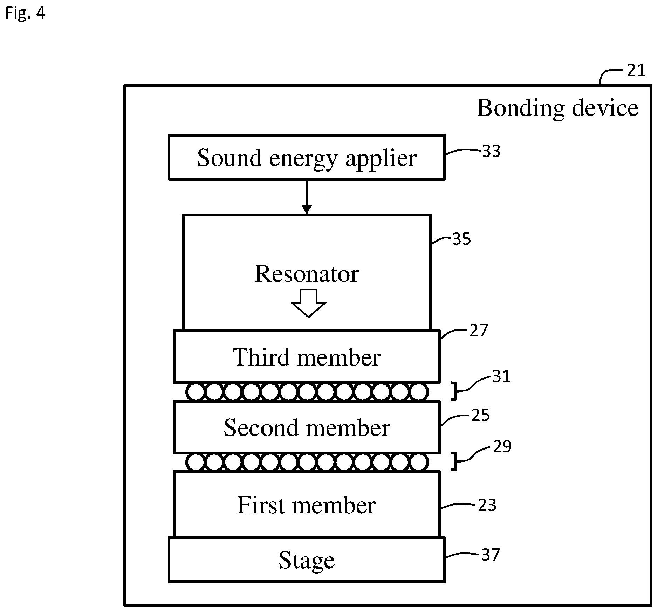

FIG. 4 is a block diagram of the bonding device according to the embodiment of the present invention, showing another example structure. A bonding device 21 performs bonding on a target object. The target object includes a first member 23, a second member 25, a third member 27, a first metal granule group 29, and a second metal granule group 31. The first member 23, the second member 25, and the third member 27 are formed from, for example, a metal (e.g., aluminum, copper, nickel, or steel) or ceramic (e.g., silicon nitride or silicon carbide). Each of the first metal granule group 29 and the second metal granule group 31 includes one or more metal granules. The metal granules are formed from a metal, such as aluminum, copper, steel, or platinum. The first metal granule group 29 is held between the first member 23 and the second member 25. The second metal granule group 31 is held between the second member 25 and the third member 27.

The bonding device 21 includes a sound energy applier 33, a resonator 35, and a stage 37.

The target object is placed on the stage 37. In FIG. 4, the first member 23 is placed on the stage 37. The first metal granule group 29 is placed on the first member 23. The second member 25 is placed on the first metal granule group 29. The second metal granule group 31 is placed on the second member 25. The third member 27 is placed on the second metal granule group 31. The first metal granule group 29 is held between the first member 23 and the second member 25. The second metal granule group 31 is held between the second member 25 and the third member 27.

The sound energy applier 33 applies sound vibrations and/or ultrasound vibrations to the resonator 35. The vibrations may be vertical or lateral.

The resonator 35 is, for example, a horn, and applies pressure to the target object and resonates with the sound vibrations and/or the ultrasound vibrations to transmit sound energy to the target object and perform bonding.

The resonator 35 applies pressure to the third member 27 from above.

The resonator 35 resonates with the sound vibrations and/or the ultrasound vibrations to transmit sound energy to the target object, bonding the first member 23 and the second member 25 together with the first metal granule group 29 between them, and bonding the second member 25 and the third member 27 together with the second metal granule group 31 between them. In this example, bonding may be performed on a single portion of the target object (separately for the first metal granule group 29 and for the second metal granule group 31) or may be performed simultaneously on multiple portions (simultaneously for the first metal granule group 29 and the second metal granule group 31).

The first member 23, the second member 25, the third member 27, the first metal granule group 29, and the second metal granule group 31 may be formed from the similar materials or dissimilar materials. Thus, metal members can be bonded together, and dissimilar materials such as a metal and ceramic can be bonded together.

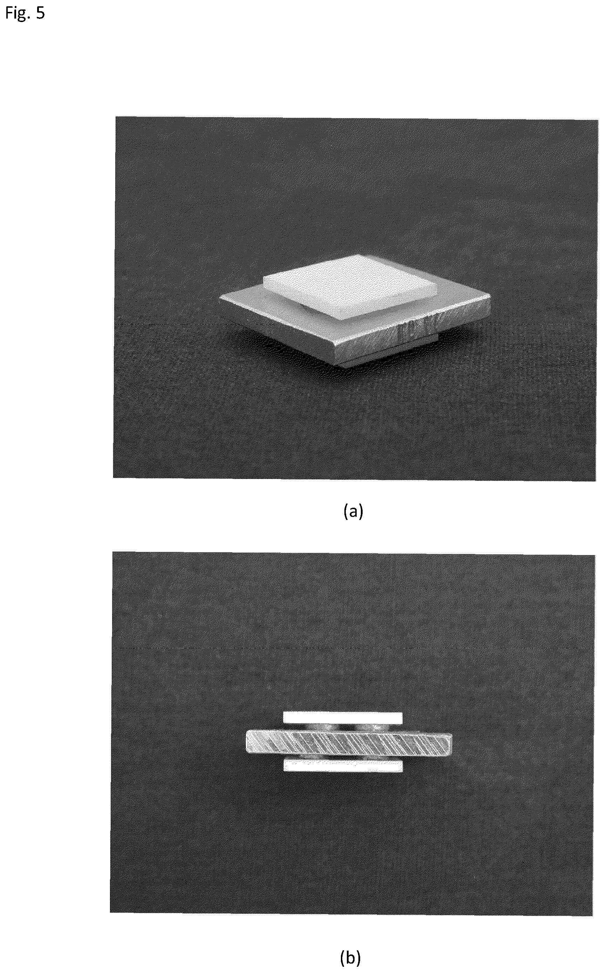

In an example of bonding shown in FIGs. 5A and 5B, the first member 23 and the third member 27 are alumina (aluminum oxide) plates, the second member 25 is an aluminum plate, and the metal granules in the first metal granule group 29 and the second metal granule group 31 are aluminum balls. FIG. 4A is an entire view of the bonded target object. FIG. 4B is a side view of the bonded target object. In this manner, multiple layers can be bonded with balls between the layers.

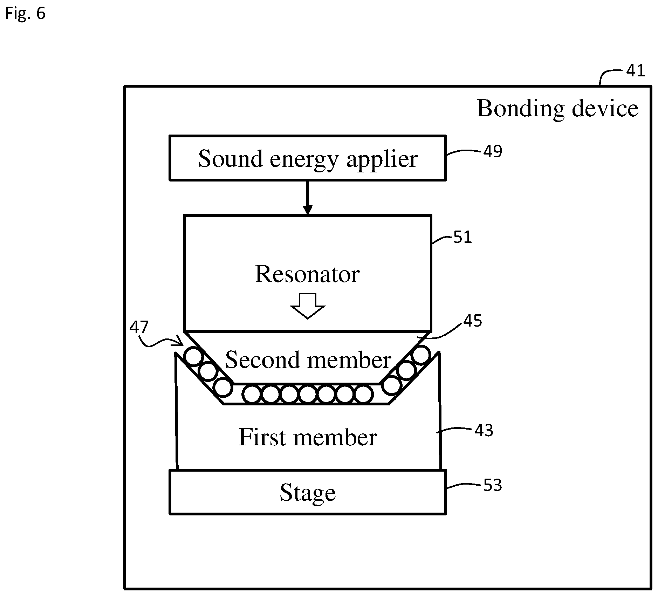

FIG. 6 is a block diagram of the bonding device according to the embodiment of the present invention, showing still another example structure.

A bonding device 41 performs bonding on a target object. The target object includes a first member 43, a second member 45, and a metal granule group 47. The first member 43 and the second member 45 are formed from, for example, a metal (e.g., aluminum, copper, nickel, or steel) or ceramic (e.g., silicon nitride or silicon carbide). The metal granule group 47 includes one or more metal granules. The metal granules are formed from a metal, such as aluminum, copper, steel, or platinum. The metal granule group 47 is held between the first member 43 and the second member 45.

The bonding device 41 includes a sound energy applier 49, a resonator 51, and a stage 53.

The target object is placed on the stage 53. In FIG. 6, the first member 43 is placed on the stage 53. The metal granule group 47 is placed on the first member 43. The second member 45 is placed on the metal granule group 47.

The sound energy applier 49 applies sound vibrations and/or ultrasound vibrations to the resonator 51. The vibrations may be vertical or lateral.

The resonator 51 is, for example, a horn, and applies pressure to the target object and resonates with the sound vibrations or the ultrasound vibrations to transmit sound energy to the target object and perform bonding.

The resonator 51 applies pressure to the second member 45 from above.

The first member 43 and the second member 45 holding the metal granule group 47 have surfaces including portions inclined with respect to the direction in which the resonator 51 applies pressure. In this example, each of the surfaces of the first member 43 and the second member 45 in contact with the metal granule group 47 includes a horizontal middle portion (in other words, a portion extending in a direction perpendicular to the direction in which the resonator 51 applies pressure) and portions inclined downward from outer peripheries of the surface toward the middle portion of the surface. When the resonator 51 applies no pressure to the second member 45, the metal granule group 47 is guided by the inclined portions to be on the middle portion. When the resonator 51 applies pressure to the second member 45, a part of the metal granule group 47 moves along the inclined portions to the middle portion.

The resonator 51 resonates with the sound vibrations and/or the ultrasound vibrations to transmit sound energy to the target object, bonding the first member 43 and the second member 45 together with the metal granule group 47 between them. Surfaces including the inclined portions can be bonded (refer to, for example, Patent Literature 1).

The first member 43, the second member 45, and the metal granule group 47 may be formed from the similar materials or dissimilar materials.

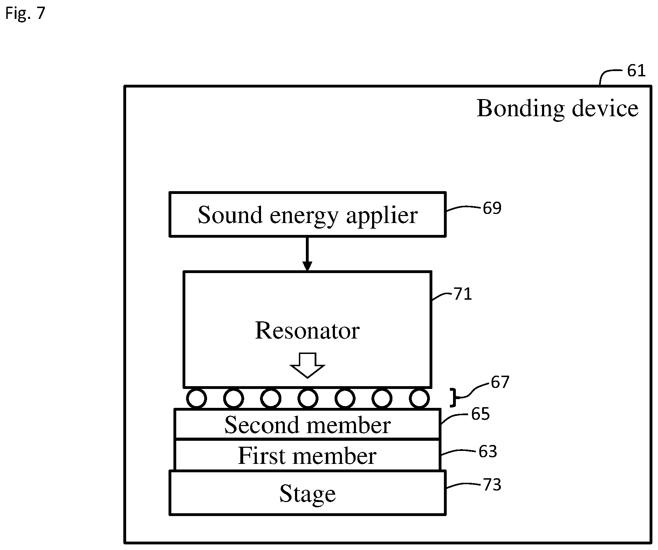

FIG. 7 is a block diagram of the bonding device according to the embodiment of the present invention, showing still another example structure.

A bonding device 61 performs bonding on the target object. The target object includes a first member 63, a second member 65, and a metal granule group 67. The first member 63 and the second member 65 are formed from, for example, foil of a metal (e.g., aluminum, copper, nickel, or steel). The metal granule group 67 includes one or more metal granules. The metal granules are formed from a metal, such as aluminum, copper, steel, or platinum. The second member 65 is placed on the first member 63. The metal granule group 67 is placed on the second member 65.

The bonding device 61 includes a sound energy applier 69, a resonator 71, and a stage 73.

The target object is placed on the stage 73. In FIG. 7, the first member 63 is placed on the stage 73. The second member 65 is placed on the first member 63. The metal granule group 67 is placed on the second member 65.

The sound energy applier 69 applies sound vibrations and/or ultrasound vibrations to the resonator 71. The vibrations may be vertical or lateral.

The resonator 71 is, for example, a horn, and applies pressure to the target object and resonates with the sound vibrations and/or the ultrasound vibrations to transmit sound energy to the target object and perform bonding.

The resonator 71 applies pressure to the metal granule group 67 from above.

The resonator 71 resonates with the sound vibrations or the ultrasound vibrations to transmit sound energy to the target object, causing the metal granules in the metal granule group 67 to penetrate the second member 65, and bond the first member 63 and the second member 65 together.

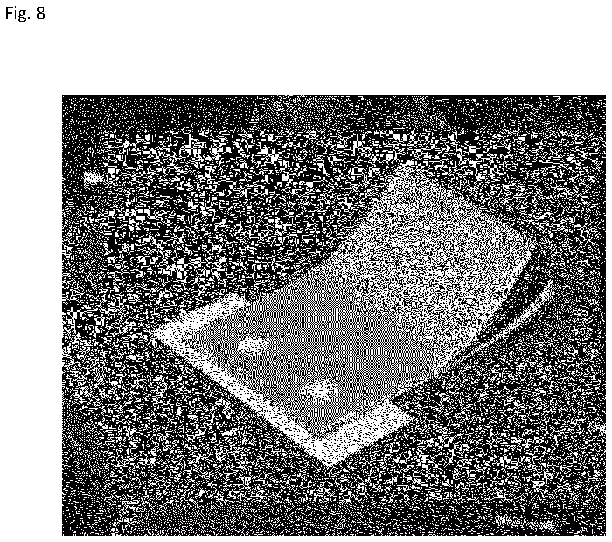

FIG. 8 shows an example of bonding of multiple sheets of metal foil with two metal balls.

Although the target object is placed on the stage that is a horizontal surface in the above examples, the first member may be held to have, for example, an inclined surface that may receive the metal granule group. The metal granule group may receive the second member on which pressure and sound energy are applied from the horn for bonding.

In an embodiment of the present invention, for example, the second member 45 in the example in FIG. 6 may have an entirely inclined shape, such as a cone shape, with no portion being perpendicular to the direction in which the resonator 51 applies pressure.

For bonding with metal granules performed on nonmetal members such as ceramic, metal granules of, for example, aluminum provided conductivity between different metal granules. This experiment suggests that other metals than aluminum may provide conductivity, and does not suggest that no material other than aluminum can provide conductivity.

The bonding device may include the resonator that applies sound energy and a pressing member that applies pressure separately to apply sound energy and pressure in different directions. For example, pressure may be applied from above whereas sound energy may be applied from below. When sound energy and pressure are applied to a surface in different directions in the example in FIG. 6, at least a portion of the surface may be inclined with respect to the direction in which pressure is applied or the direction in which sound is applied.

In the example in FIG. 7, the metal granules may be located, for example, below the first member and the second member. The metal granules may be closer to or farther from the resonator than the first member and the second member.

### REFERENCE SIGNS LIST

- 1: Bonding device
- 3: First member
- 5: Second member
- 7: Metal granule group
- 9: Sound energy applier
- 11: Resonator
- 13: Stage
- 21: Bonding device
- 23: First member
- 25: Second member
- 27: Third member
- 29: First metal granule group
- 31: Second metal granule group
- 33: Sound energy applier
- 35: Resonator
- 37: Stage
- 41: Bonding device
- 43: First member
- 45: Second member
- 47: Metal granule group
- 49: Sound energy applier
- 51: Resonator
- 53: Stage
- 61: Bonding device
- 63: First member
- 65: Second member
- 67: Metal granule group
- 69: Sound energy applier
- 71: Resonator
- 73: Stage

## Claims

1. A bonding method for performing bonding on a target object, the target object including a first member, a second member, and a first metal granule group including one or more metal granules, the method comprising:
transmitting, with a resonator, sound energy to the target object to bond the first member and the second member with the one or more metal granules.

2. The bonding method according to claim 1, wherein
the first metal granule group is held between the first member and the second member in the target object,
transmitting the sound energy includes applying pressure to the target object to cause at least one metal granule to be in contact with the first member and the second member, and transmitting, with the resonator, the sound energy to the target object to cause the at least one metal granule being in contact with the first member and the second member to be bonded to the first member and the second member.

3. The bonding method according to claim 2, wherein
the one or more metal granules have a spherical shape, an ellipsoidal shape, or a shape with a flat surface.

4. The bonding method according to claim 2, wherein
the at least one metal granule is spaced from another metal granule to be bonded to the first member and the second member.

5. The bonding method according to claim 2, wherein
transmitting the sound energy includes applying pressure to the target object, and
the first member has a surface in contact with the first metal granule group, the second member has a surface in contact with the first metal granule group, and at least a portion of at least one of the surface of the first member or the surface of the second member is inclined with respect to a direction in which at least one of the pressure or the sound energy is applied.

6. The bonding method according to claim 1, wherein
the first member and the second member are stacked on each other without the one or more metal granules in the first metal granule group held between the first member and the second member in the target object, and
transmitting the sound energy includes transmitting the sound energy to bond the first member and the second member stacked on each other with the one or more metal granules in the first metal granule group.

7. The bonding method according to claim 6, wherein
transmitting the sound energy includes causing the one or more metal granules in the first metal granule group to penetrate at least one of the first member or the second member to bond the first member and the second member.

8. A bonding device for performing bonding on a target object, the target object including a first member, a second member, and a first metal granule group including one or more metal granules, the bonding device comprising:
a resonator configured to transmit sound energy to the target object to bond the first member and the second member.

9. The bonding device according to claim 8, wherein
the first metal granule group is held between the first member and the second member in the target object,
the resonator applies pressure to the target object to transmit sound energy to the target object to cause at least one metal granule to be in contact with and bonded to the first member and the second member.

10. The bonding device according to claim 9, wherein
the one or more metal granules have a spherical shape, an ellipsoidal shape, or a shape with a flat surface.

11. The bonding device according to claim 9, wherein
the at least one metal granule is spaced from another metal granule to be bonded to the first member and the second member.

12. The bonding device according to claim 9, wherein
the target object receives pressure, and
the first member has a surface in contact with the first metal granule group, the second member has a surface in contact with the first metal granule group, and at least a portion of at least one of the surface of the first member or the surface of the second member is inclined with respect to a direction in which at least one of the pressure or the sound energy is applied.

13. The bonding device according to claim 8, wherein
the first member and the second member are stacked on each other without the one or more metal granules in the first metal granule group held between the first member and the second member in the target object, and
the sound energy causes the first member and the second member stacked on each other to be bonded with the one or more metal granules in the first metal granule group.

14. The bonding device according to claim 13, wherein
the one or more metal granules in the first metal granule group penetrate at least one of the first member or the second member to bond the first member and the second member.
